# EUROPÄISCHE PATENTSCHRIFT

(11) **EP 2 870 876 B1**
(45) Veröffentlichungstag und Bekanntmachung des Hinweises auf die Patenterteilung: **10.05.2017**
(21) Anmeldenummer: 14192754.1
(22) Anmeldetag: 12.11.2014
(51) Int. Cl.: A21B 1/10, A21B 1/26, A21B 1/48

(54) **Backofen**
Baking oven
Four de cuisson

(30) Priorität: 12.11.2013 DE 102013223030
(43) Veröffentlichungstag der Anmeldung: 13.05.2015
(73) Patentinhaber: Kaak Groep B.V., 7061 GA Terborg (NL)
(72) Erfinder: Zapp, Uwe Günther, 21271 Asendorf (DE)
(74) Vertreter: Glawe, Delfs, Moll

(56) Entgegenhaltungen:
- EP-A2- 1 685 762
- DE-U1- 20 304 497
- FR-E- 68 209
- US-A- 3 548 514
- US-A- 4 338 911
- US-A- 4 355 972
- US-A- 4 479 776
- US-A- 4 556 043
- US-A- 4 881 519
- US-A- 5 231 920
- US-A- 5 454 295
- US-A1- 2008 087 175
- US-B1- 6 192 877
- US-B1- 6 572 911
- US-B1- 6 833 533

## Beschreibung

Die Erfindung betrifft einen Backofen mit einem Backraum und darin angeordneter Auflageeinrichtung zur Auflage von Backgut oder Backgutträgern.

Backöfen mit einem Backraum und darin angeordneter Auflageeinrichtung sind im Stand der Technik in verschiedenen Ausführungen bekannt. Eine mögliche Ausführungsform umfasst eine schlangenförmig geführte Leitung für Thermoöl, welche unterhalb der Auflageeinrichtung angeordnet ist. Strömt durch diese Leitung ein in einem Brenner erhitztes Thermoöl, gibt das Thermoöl wenigstens einen Teil seiner Wärmeenergie über die Leitung im Bereich des Backraums ab, wodurch der Backraum erwärmt wird.

Um das in einem entsprechenden Backofen erreichbare Backergebnis zu verbessern, ist darüber hinaus bekannt, seitlich in einen Raum unterhalb der schlangenförmig angeordneten Leitung für das Thermoöl Luft einzublasen. Diese Luft strömt dann durch eine Spalte, die sich aufgrund der schlangenförmigen Anordnung der Leitung zwischen den einzelnen Leitungsabschnitten ergeben, wobei die Luft erwärmt wird. Anschließend gelangt die so erwärmte Luft durch die Auflageeinrichtung zu dem dort aufgelegten Backgut oder den dort aufgelegten Backgutträgern.

Entsprechende als Durchlauföfen ausgebildete Backöfen sind aus den Dokumenten US 4,338,911 A, US 2008/087175 A1, US 6,833,533 B1 und US 5,454,295 A bekannt.

Während Backöfen gemäß diesem Stand der Technik zum Backen für eher unempfindliche Backwaren, wie beispielsweise Brote, grundsätzlich geeignet sind, hat sich gezeigt, dass sich empfindliche Backwaren, wie Kuchen oder Konditorwaren, nicht zuverlässig und in guter Qualität in entsprechenden Backöfen backen lassen.

In Dokument FR 68 209 E ist ein Etagenofen mit einer Umluftvorrichtung offenbart, der an einer Seite eine verschließbare Belade- und Entnahmeöffnung aufweist. Die Umluftvorrichtung weist Luftleitvorrichtungen zur Optimierung des Umluftstroms auf.

Der Erfindung liegt daher die Aufgabe zugrunde, einen als Durchlaufofen ausgestalteten Backofen zu schaffen, der die Nachteile der aus dem Stand der Technik bekannten Backöfen nicht mehr oder nur noch in vermindertem Umfang aufweist. Gelöst wird diese Aufgabe durch einen Backofen gemäß dem Hauptanspruch. Vorteilhafte Weiterbildungen sind Gegenstand der abhängigen Ansprüche.

Demnach betrifft die Erfindung einen Backofen umfassend einen Backraum und einer darin angeordneten Auflageeinrichtung zur Auflage von Backgut oder Backgutträgern, wobei unterhalb der Auflageeinrichtung ein Register und ein Registerunterraum vorgesehen sind, die derart ausgestaltet sind, dass in den Registerunterraum eingeblasene Luft vom Registerunterraum durch das Register und die Auflageeinrichtung zur Oberseite der Auflageeinrichtung gelangen kann, und wobei erfindungsgemäß zwischen Registerunterraum und Register eine Luftleiteinrichtung mit einer Mehrzahl von Durchlassöffnungen vorgesehen ist, wobei die Durchlassöffnungen derart angeordnet sind, dass aus dem Registerunterraum durch die Durchlassöffnungen der Luftleiteinrichtung durchtretende Luft auf die Unterseite der Leitungen des Registers auftrifft und die Leitungen des Registers so direkt angeblasen werden.

Bei einem "Register" handelt es sich um eine flächige Anordnung einer Leitung, sodass sich ein flächiges Element mit einem Zuflussanschluss und einen Abflussanschluss ergibt. Die Länge der Leitung ist dabei größer als der Abstand zwischen Zufuhr- und Abflussanschluss. Wird ein Fluid durch den Zufuhranschluss des Registers zugeführt, fließt es durch die gesamte Leitung des Registers, bevor es an dem Abflussanschluss wieder austritt. Bei einem Register kann die Leitung insbesondere schlangenförmig angeordnet bzw. in anderen Worten als im Wesentlichen ebene Rohrschlange ausgestaltet sein. Im Register können Zwischenräume, Spalten und/oder Durchlassöffnungen vorgesehen sein, mit denen die für die Erfindung erforderliche Durchlässigkeit für Luft durch das Register gewährleistet wird.

Durch die erfindungsgemäße Luftleiteinrichtung bzw. deren erfindungsgemäßer Anordnung der Durchlassöffnungen wird sichergestellt, dass die Luft aus dem Registerunterraum über definierte Wege zur Oberseite der Auflagerichtung gelangt. Die durch die Durchlassöffnungen der Luftleiteinrichtung aus dem Registerunterraum durchtretende Luft trifft auf der Unterseite der Leitungen des Registers auf und wird dadurch umgeleitet. Ein direktes "Durchschießen", bei welchem die Luft aus dem Registerunterraum auf direktem Weg und ohne jegliche Richtungsänderung zur Oberseite der Auflageeinrichtung gelangen kann, tritt bei dem erfindungsgemäßen Backofen also nicht auf.

Beispielsweise kann bei Leitungen mit einem Rechteckquerschnitt die Unterseite der Leitung des Registers für die durch die Durchlassöffnungen der Luftleiteinrichtung durchtretende Luft als senkrechte Prallplatte verstanden werden, bei der der Luftstrom in Richtungen parallel zur Prallplatte umgelenkt wird. Erst anschließend gelangt die Luft durch die Zwischenräume zwischen den Leitungen des Registers - d. h. in der Regel nach einer erneuten Richtungsänderung - zur Auflageeinrichtung und von dort aus zu auf der Auflageeinrichtung aufliegendem Backgut oder aufliegenden Backgutträgern. Es sind aber selbstverständlich auch andere Querschnitte für die Leitungen des Registers möglich, wobei erfindungsgemäß die durch die Durchlassöffnungen der Luftleiteinrichtung durchtretende Luft grundsätzlich um die Leitungen des Registers herumgeleitet wird, bevor sie zur Oberseite der Auflageeinrichtung gelangt.

Die erfindungsgemäß vorgesehene Luftleiteinrichtung erreicht wenigstens zwei Vorteile gegenüber dem Stand der Technik. Zum einen wird durch das Umleiten der Luft um die Leitungen des Registers eine Vergleichmäßigung des aus der Auflageeinrichtung austretenden Luftstroms erreicht, was wiederum zu einer Vergleichmäßigung der Bedingungen im Backraum führt. Zum anderen wird der Wärmeaustausch zwischen den Leitungen des Registers und der daran vorbeiströmenden Luft verbessert. Es hat sich herausgestellt, dass ein erfindungsgemäßer Backofen anders als die Backöfen aus dem Stand der Technik auch zum Backen von empfindlichen Backwaren, wie Kuchen oder Konditorwaren, zuverlässig verwendet werden kann.

Zur Vergleichmäßigung des aus der Auflageeinrichtung austretenden Luftstroms ist es bevorzugt, wenn wenigstens zwei unterschiedliche Größen von Durchlassöffnungen vorgesehen sind. Durch die Größe der Durchlassöffnungen kann der durch die einzelnen Durchlassöffnungen der Luftleiteinrichtung strömende Luftstrom beeinflusst werden. Weiter bevorzugt ist es, wenn die Durchlassöffnungen der Luftleiteinrichtung hinsichtlich ihrer Größe einstellbar sind. Eine entsprechende Einstellbarkeit kann beispielsweise durch ein Drosselblech erreicht werden, mit dem eine Durchlassöffnung teilweise abgedeckt wird, um so den freien Querschnitt der Durchlassöffnung zu verringern. Die Durchlassöffnungen der Luftleiteinrichtung können individuell einstellbar sein. Es ist aber auch möglich, dass die Durchlassöffnungen gruppenweise einstellbar sind. Für eine gruppenweise Einstellbarkeit kann beispielsweise ein Drosselblech derart ausgestaltet sein, dass es sich über mehrere Durchlassöffnungen erstreckt und diese teilweise abdeckt.

Um insbesondere bei größeren Backöfen mit einem oder mehreren großflächigen Registern eine noch weiter verbesserte Vergleichmäßigung des aus der Auflageeinrichtung austretenden Luftstroms zu erreichen, kann vorgesehen sein, dass der Registerunterraum in Registerunterraumabschnitte geteilt ist, wobei ein Luftaustausch zwischen den einzelnen Registerunterraumabschnitten verhindert wird. Indem der Registerraum in einzelne diskrete Abschnitte geteilt wird, lässt sich über eine abschnittsweise Einstellbarkeit der in einen Registerunterraum eingeblasenen Luft - insbesondere in Verbindung mit einer Einstellbarkeit der Durchlassöffnung - eine über die gesamte Fläche des oder der Register gleichmäßige Luftströmung an der Oberseite der Auflagefläche erreichen.

Zum Einblasen der Luft in den Rostunterraum oder in wenigstens einen Rostunterraumabschnitt ist vorzugsweise wenigstens ein Gebläse vorgesehen, wobei die Luft seitlich in den Rostunterraum oder in wenigstens einen Rostunterraumabschnitt eingeblasen wird. Die Einblasrichtung ist dabei vorzugsweise senkrecht zur Richtung der Durchlassöffnung.

Es ist weiterhin vorgesehen, dass zwischen Gebläse und Rostunterraum oder wenigstens einem Rostunterraumabschnitt eine Einblaseinrichtung zur Vergleichmäßigung des Luftstroms beim Einblasen der Luft in den Rostunterraum oder wenigstens einem Rostunterraumabschnitt in Richtung senkrecht zur Einblasrichtung und senkrecht zur Richtung der Durchlassöffnungen vorgesehen ist. Mit einer entsprechenden Einblaseinrichtung kann ein über den Bereich, in dem Luft durch die Einblaseinrichtung in den Rostunterraum oder wenigstens einen Rostunterraumabschnitt eingeblasen wird, möglichst gleichmäßiger Luftstrom erreicht werden.

Es ist bevorzugt, wenn der Registerunterraum oder die Registerunterraumabschnitte wenigstens teilweise als Schubkästen ausgestaltet sind, die sich vorzugsweise in einer Richtung senkrecht zur Richtung der Durchlassöffnungen in den Backofen einschieben und herausziehen lassen. Ein Schubkasten kann durch seine Seitenwände den Registerunterraum oder einen Registerunterraumabschnitt begrenzen, wobei vorzugsweise eine Seitenwand wenigstens eine Öffnung zum Einblasen von Luft in den so definierten Registerunterraum oder einen Registerunterraumabschnitt aufweist. Es ist weiterhin bevorzugt, wenn der Schubkasten einen Deckel aufweist, der im eingeschobenen Zustand wenigstens teilweise die Luftleiteinrichtung bildet.

Bei dem Backofen handelt es sich um einen Durchlaufofen mit einem Aufgabeende und einem Ausgabeende, bei dem die Auflageeinrichtung als Transporteinrichtung zum Transport von Backgut oder Backgutträgern in eine Transportrichtung durch den Backraum vom Aufgabeende zum Ausgabeende ausgebildet ist. Die Transporteinrichtung ist dabei bevorzugt als umlaufendes Förderband ausgestaltet, wobei der Rücklauf des Förderbandes auch unterhalb des Registerunterraums angeordnet sein kann.

Durch einen Nachrüstsatz, der insbesondere in Hinblick auf die Anordnung der Durchlassöffnungen in der Luftleiteinrichtung an bestimmte Backofenmodelle angepasst sein kann, lassen sich bereits vorhandene Backöfen - auch solche aus dem Stand der Technik - zu einem erfindungsgemäßen Backofen nachrüsten. Der Nachrüstsatz kann dabei insbesondere einen Schubkasten umfassen, dessen Deckel wenigstens teilweise die Luftleiteinrichtung des Nachrüstsatzes bildet. Ein entsprechender Schubkasten kann einfach in einen ggf. vorhandenen Registerunterraum eines nachzurüstenden Backofens eingeschoben werden.

Die Erfindung wird nun anhand vorteilhafter Ausführungsformen unter Bezugnahme auf die beigefügten Zeichnungen beispielhaft beschrieben. Es zeigen:
- Figur 1:: eine schematische Darstellung eines ersten erfindungsgemäßen Backofens;
- Figur 2:: einen Teilschnitt durch den Backofen aus Figur 1;
- Figur 3:: eine schematische Darstellung eines Ofensegmentes eines zweiten erfindungsgemäßen Backofens;
- Figur 4:: eine Draufsicht auf das Ofensegment aus Figur 3;
- Figur 5:: eine Detaildarstellung eines Schubkastens des Ofensegmentes gemäß Figuren 3 und 4; und
- Figur 6:: eine Detaildarstellung der Einblaseinrichtung des Ofensegmentes aus Figuren 3 und 4.

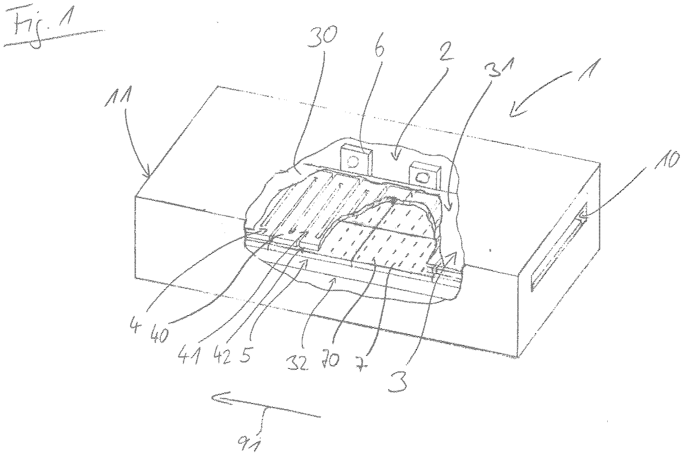

In Figur 1 ist eine schematische Darstellung eines erfindungsgemäßen Backofens 1 gezeigt. Der Backofen 1 weist einen Backraum 2 auf, in dem eine Auflageeinrichtung 3 angeordnet ist. Der Backofen 2 ist als Durchlaufofen ausgestaltet. Bei der Auflageeinrichtung 3 handelt es sich daher um eine Transporteinrichtung 30. Mit dieser Transporteinrichtung 30 kann Backgut und/oder Backgutträger (nicht dargestellt) in Transportrichtung 91 von einem Aufgabeende 10 zu einem Ausgabeende 11 des Backofens 1 transportiert werden. Die Transporteinrichtung 30 ist als endloses, luftdurchlässiges Förderband ausgestaltet. Der Bereich der Transporteinrichtung 30, auf den Backgut und/oder Backgutträger auf das Förderband abgelegt und letztendlich transportiert werden kann, wird dabei als Transportbereich 31 bezeichnet. Der Bereich, in dem das Förderband zurückgeführt wird, ist der Rücklauf 32. Beispielsweise kann es sich bei dem Förderband um ein Kettengliederband handeln.

Unterhalb des Transportbereichs 31 der Transporteinrichtung 30 ist ein Register 4 angeordnet. Das Register 4 umfasst eine flächige Anordnung einer schlangenförmig geführten Leitung 40. Durch diese Leitung 40 wird durch einen Brenner (nicht dargestellt) erhitztes Thermoöl geleitet, welches im Bereich des Registers 4 Wärme an den Backraum 2 abgibt und diesen so erwärmt. Die Leitung 40 weist einen rechteckigen Querschnitt auf. Im Register 4 sind aufgrund der schlangenförmigen Anordnung der Leitung 40 Zwischenräume 41 zwischen den einzelnen Abschnitten der Leitung 40 vorhanden.

Unterhalb des Registers 4 befindet sich der Registerunterraum 5. Über die Gebläse 6 wird Luft aus dem Bereich oberhalb der Transporteinrichtung 30 in den Registerunterraum 5 eingeblasen. Von dem Registerunterraum 5 gelangt die Luft durch die Zwischenräume 41 im Register 4 und die luftdurchlässige Transporteinrichtung 30 auf die Oberseite der Transporteinrichtung 30 bzw. zu auf der Transporteinrichtung 30 aufliegendem Backgut und/oder aufliegenden Backgutträgern (nicht dargestellt).

Zwischen Registerunterraum 5 und Register 4 ist eine Luftleiteinrichtung 7 vorgesehen. Diese Luftleiteinrichtung 7 weist eine Vielzahl von Durchlassöffnungen 70 auf. Die Durchlassöffnungen 70 sind so angeordnet, dass von dem Registerunterraum 5 durch die Durchlassöffnungen 70 durchtretende Luft auf die Unterseite 42 der Leitung 40 des Registers 4 auftrifft. Die Leitung 40 des Registers 4 wird so direkt angeblasen.

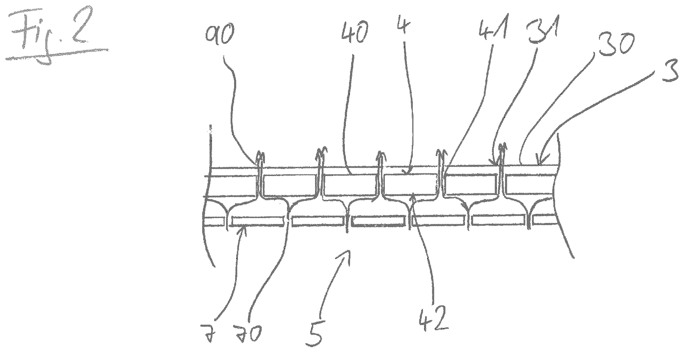

In Figur 2 ist ein schematischer Teilschnitt durch den Backofen 1 aus Figur 1 dargestellt. Der Schnitt verläuft dabei in Längsrichtung des Backofens 1, also in Richtung vom Aufgabeende 10 zum Ausgabeende 11. Die Pfeile 90 in Figur 2 verdeutlichen dabei den Strömungspfad der Luft vom Registerunterraum 5 zur Oberseite der Transportvorrichtung 30.

Wie dargestellt, gelangt die Luft aus dem Registerunterraum 5 durch die Durchlassöffnungen 70 in der Luftleiteinrichtung 7 zum Register 4. Die Durchlassöffnungen 70 sind erfindungsgemäß so angeordnet, dass die dadurch durchtretende Luft jeweils auf die Unterseite 42 der Leitung 40 auftrifft. Die Unterseite 42 der Leitung 40 kann dabei als Prallplatte verstanden werden, durch die die aus dem Registerunterraum 5 kommende Luft umgelenkt wird. Die Luft gelangt anschließend - nach erneuter Richtungsänderung - durch die Zwischenräume 41 des Registers 40 zum Transportbereich 31 der Transportvorrichtung 30 und durch dieses hindurch zur Oberseite der Transportvorrichtung 30 bzw. der Auflageeinrichtung 3.

Durch die Luftleiteinrichtung 7 wird eine Vergleichmäßigung der durch das Förderband 30 hindurchtretenden Luftströmung erreicht, womit dann auch vergleichmäßigte Bedingungen im Backraum 2 des Backofens 1 geschaffen werden können. Entsprechend vergleichmäßigte Bedingungen ermöglichen u. a., empfindliche Backwaren, wie Kuchen oder Konditorwaren, zuverlässig und in guter Qualität im Backofen 1 backen zu können.

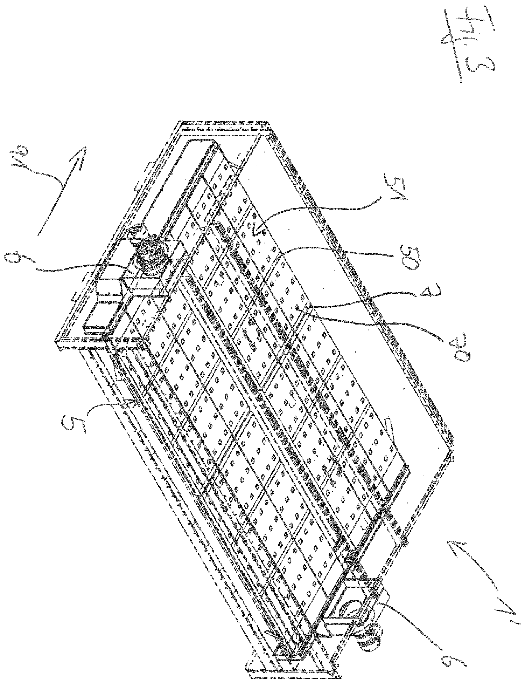

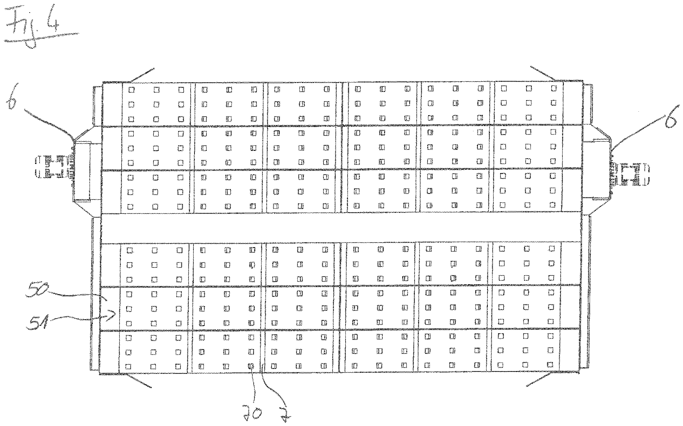

In Figuren 3 und 4 ist ein Segment 1' eines zweiten Ausführungsbeispiels eines erfindungsgemäßen Backofens 1 dargestellt. Mehrere Segmente 1' gemäß diesen Figuren lassen sich zu einem Durchlaufofen mit einer Transportrichtung 91 vergleichbar mit dem aus Figur 1 zusammenfügen. Aus Gründen der Übersichtlichkeit wurde darüber hinaus in den Figuren 3 und 4 auf die Darstellung des Registers 4 und der Auflageeinrichtung 3 bzw. der als Förderband ausgestalteten Transportvorrichtung 30 verzichtet. Es wird auf die obigen Ausführungen zu Figuren 1 und 2 verwiesen.

Der Registerunterraum 5 ist bei der Ausführung gemäß Figuren 3 und 4 durch Schubkästen 50 in mehrere Registerunterraumabschnitte 51 unterteilt, wodurch sich u. a. eine mittige Trennung des Registerunterraums 5 parallel zur Transportrichtung 91 ergibt. In Richtung quer zur Transportrichtung 91 ist ein Freiraum zwischen den Schubkästen 50 vorgesehen, in dem ein Versteifungselement für das Backofensegment 1' oder eine Führungsrolle für das Förderband der Transporteinrichtung 30 (nicht dargestellt) angeordnet sein kann. In die einzelnen Schubkästen 50 wird durch die Gebläse 6 seitlich Luft eingeblasen.

Die Schubkästen 50 weisen an ihrer Oberseite jeweils eine Luftleiteinrichtung 7 mit Durchlassöffnungen 70 auf. Die Durchlassöffnungen 70 sind dabei so angeordnet, dass die in den Registerunterraum 5 bzw. die Schubkästen 50 eingeblasene und durch die Durchlassöffnungen 70 austretende Luft jeweils auf die Unterseite der Leitung des Registers (nicht dargestellt) auftrifft. Auch für das Ausführungsbeispiel aus Figuren 3 und 4 ergeben sich somit Strömungspfade, wie sie in Figur 2 beispielhaft skizziert sind. Zur Erläuterung auch der damit verbundenen Vorteile wird auf die diesbezüglichen Ausführungen verwiesen.

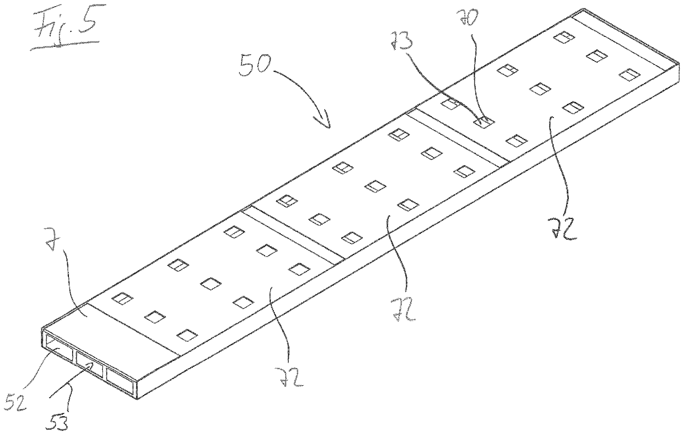

In Figur 5 ist eine Detaildarstellung eines Schubkastens 50, wie er bei dem Backofensegment 1' gemäß Figuren 3 und 4 eingesetzt wird, dargestellt. Der Schubkasten 50 weist an einer Seite Einblasöffnungen 52 auf, über die Luft in das Innere des Schubkastens 50 gelangen kann. Der Schubkasten 50 ist an seiner Oberseite durch einen Deckel verschlossen, der zumindest einen Teil der Luftleiteinrichtung 7 bildet. In der Luftleiteinrichtung 7 sind matrixartig angeordnete Durchlassöffnungen 70 vorgesehen. Im dargestellten Ausführungsbeispiel weist der Schubkasten 50 eine 3x9-Anordnung von Durchlassöffnungen 70 auf.

Aufgrund des seitlichen Einblasens von Luft in den Schubkasten 50 ergibt sich ein Druckverlauf im Schubkasten 50 in Einblasrichtung 53. Ein entsprechender Druckverlauf kann zu unterschiedlichen Luftströmen durch die einzelnen Durchlassöffnungen 70 führen, insbesondere wenn diese grundsätzlich die gleiche Größe aufweisen. Um dem entgegenzuwirken und eine Vergleichmäßigung der Luftströme durch die einzelnen Durchlassöffnungen 70 eines Schubkastens 50 zu erreichen, sind Drosselbleche 72 vorgesehen. Die Drosselbleche 72 weisen jeweils eine 3x3-Matrix an Öffnungen 73 auf, die derart ausgestaltet sind, dass sich die Öffnungen 73 im Drosselblech vollständig fluchtend mit den Durchlassöffnungen 70 am Schubkasten 50 anordnen lassen. Durch die gegenüber den Durchlassöffnungen 70 in Einblasrichtung 53 versetzte Anordnung der Drosselbleche 72 lassen sich die Durchlassöffnungen 70 gruppenweise - nämlich in Gruppen zu 3x3-Durchlassöffnungen - in ihrer Größe einstellen, d. h. der freie Querschnitt der Durchlassöffnungen 70 wird verändert. Es hat sich gezeigt, dass eine entsprechende gruppenweise Einstellung der Größe der Durchlassöffnungen 70 eine ausreichende Vergleichmäßigung der Luftströme durch die Durchlassöffnungen 70 eines Schubkastens 50 ermöglicht.

Es ist aber selbstverständlich auch möglich, die Größe der einzelnen Durchlassöffnungen 70 durch separate Drosselbleche 72 individuell einzustellen. Die Drosselbleche 72 können, nachdem die Einstellung der Größe der Durchlassöffnungen 70 vorgenommen wurde, beispielsweise durch Punktschweißen oder Kleben am Schubkasten 50 befestigt werden. Entsprechende Drosselbleche 72 können selbstverständlich auch bei Backöfen 1 zum Einsatz kommen, in denen der Rostunterraum 5 nicht durch Schubkästen 50 in Rostunterraumabschnitte 51 unterteilt ist (vgl. bspw. Figur 1).

Um bei einer Anordnung von mehreren Schubkästen 50, wie sie beispielsweise in Figuren 3 und 4 dargestellt ist, eine Vergleichmäßigung der Luftströme durch die Durchlassöffnungen 70 über die einzelnen Schubkästen 50 hinweg zu gewährleisten und/oder zu erleichtern, kann es vorteilhaft sein, wenn die jeweils in die einzelnen Schubkästen 50 eingeblasenen Luftströme vergleichmäßigt sind, d. h. in jeden Schubkasten 50 in etwa die gleiche Luftmenge eingeblasen wird. Sind mehrere Gebläse 6 für einzelne Schubkästen 50 vorgesehen, kann über die Einstellung der Gebläse 6 eine entsprechende Vergleichmäßigung erreicht werden. Sind mehrere Schubkästen 50 zu einer Gruppe zusammengefasst, die einem einzelnen Gebläse 6 zugeordnet ist, kann eine Einblaseinrichtung 8 zwischen Gebläse 6 und dem Rostunterraum 5 bzw. den einzelnen Schubkästen 50 vorgesehen sein.

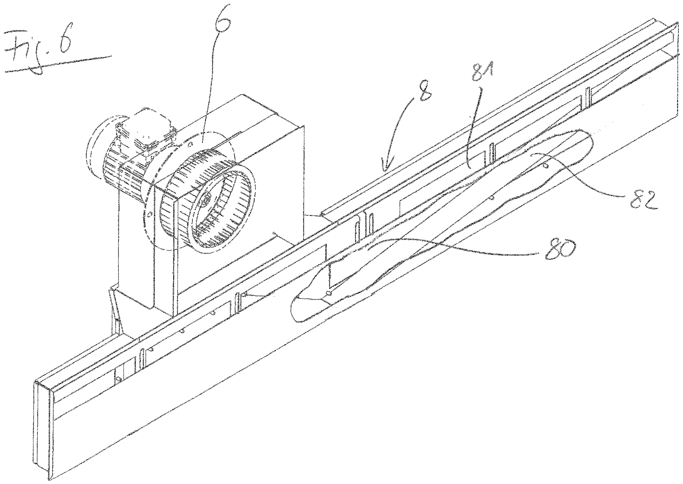

In Figur 6 ist eine entsprechende Einblaseinrichtung 8 zur Vergleichmäßigung des Einblasens der Luft in den Rostunterraum 5 zwischen Gebläse 6 und dem Rostunterraum 5 bzw. den einzelnen Schubkästen 50 dargestellt. Zwischen dem Gebläse 6 und den einzelnen Schubkästen 50 (vgl. beispielsweise Figur 3) ist ein Verteilerraum 80 mit mehreren Auslassöffnungen 81 vorgesehen. In dem Verteilerraum 80 sind Luftführungsbleche 82 vorgesehen, mit denen eine Vergleichmäßigung der aus den einzelnen Auslassöffnungen 81 austretenden und dadurch in die einzelnen Schubkästen 50 eingeblasenen Luftströme erreicht wird. In anderen Worten wird durch die in Figur 6 gezeigte Einblaseinrichtung 8 die seitlich in den Rostunterraum 5 eingeblasene Luft entlang der Transportrichtung 91 über die Einblaseinrichtung 8 vergleichmäßigt.

Der Schubkasten 50 aus Figur 5 kann auch ein Nachrüstsatz sein. Der Schubkasten 50 kann nämlich in einen bereits vorhandenen Backofen mit einem Backraum, einer darin angeordnete Auflageeinrichtung zur Auflage von Backgut oder Backgutträgern, einem unterhalb der Auflageeinrichtung angeordneten Register und einem Registerunterraum, die derart ausgestaltet sind, dass in den Registerunterraum eingeblasene Luft vom Registerunterraum durch das Register und die Auflageeinrichtung zur Oberseite der Auflageeinrichtung gelangen kann, verwendet werden. Ein oder mehrere Schubkasten 50 werden dazu so in den Registerraum des vorhandenen Backofens eingeschoben, dass die in den Registerunterraum eingeblasene Luft durch die Einblasöffnungen 51 in den Schubkasten 50 gelangt und die Leitung des Registers des vorhandenen Backofens durch die Durchlassöffnungen 70 am einen Teil der Luftleiteinrichtung 7 bildenden Deckel des Schubkastens 50 erfindungsgemäß angeblasen werden. Der Schubkasten 50 bzw. die Anordnung der Durchlassöffnungen 70 kann dabei an die Dimensionen des nachzurüstenden Backofens angepasst sein.

## Patentansprüche

1. Backofen (1) umfassend einen Backraum (2) und einer darin angeordnete Auflageeinrichtung (3) zur Auflage von Backgut oder Backgutträgern, wobei unterhalb der Auflageeinrichtung (3) ein Register (4) und ein Registerunterraum (5) vorgesehen sind, die derart ausgestaltet sind, dass in den Registerunterraum (5) eingeblasene Luft vom Registerunterraum (5) durch das Register (4) und die Auflageeinrichtung (3) zur Oberseite der Auflageeinrichtung (3) gelangen kann, wobei der Backofen (1) ein Durchlaufofen mit einem Aufgabeende (10) und einem Ausgabeende (11) ist, bei dem die Auflageeinrichtung (3) als Transporteinrichtung (30) zum Transport von Backgut oder Backgutträgern in eine Transportrichtung (91) durch den Backraum (2) vom Aufgabeende (10) zum Ausgabeende (11) ausgebildet ist,
**dadurch gekennzeichnet, dass**
das Register (4) eine flächige Anordnung einer Leitung (40) mit einem Zuflussanschluss und einen Abflussanschluss ist, bei der die Länge der Leitung (40) größer ist als der Abstand zwischen Zufluss- und Abflussanschluss, und dass zwischen Registerunterraum (5) und Register (4) eine Luftleiteinrichtung (7) mit einer Mehrzahl von Durchlassöffnungen (70) vorgesehen ist, wobei die Durchlassöffnungen (70) derart angeordnet sind, dass aus dem Registerunterraum (5) durch die Durchlassöffnungen (70) der Luftleiteinrichtung (7) durchtretende Luft auf die Unterseite der Leitung (40) des Registers (4) auftrifft und die Leitung (40) des Registers (4) so direkt angeblasen wird.

2. Backofen nach Anspruch 1,
**dadurch gekennzeichnet, dass**
wenigstens zwei unterschiedliche Größen von Durchlassöffnungen (70) vorgesehen sind.

3. Backofen nach Anspruch 1 oder 2,
**dadurch gekennzeichnet, dass**
die Durchlassöffnungen (70) der Luftleiteinrichtung (7) hinsichtlich ihrer Größe einstellbar sind, wobei die Einstellbarkeit vorzugsweise individuell oder gruppenweise möglich ist.

4. Backofen nach einem der vorhergehenden Ansprüche,
**dadurch gekennzeichnet, dass**
der Registerunterraum (5) in Registerunterraumabschnitte (51) geteilt ist, wobei ein Luftaustausch zwischen den einzelnen Registerunterraumabschnitten (51) verhindert wird.

5. Backofen nach einem der vorhergehenden Ansprüche,
**dadurch gekennzeichnet, dass**
wenigstens ein Gebläse (6) zum seitlichen Einblasen von Luft in den Registerunterraum (5) oder in wenigstens einen Registerunterraumabschnitt (51) vorgesehen ist, wobei die Einblasrichtung vorzugsweise senkrecht zur Richtung der Durchlassöffnung (70) ist.

6. Backofen nach Anspruch 5,
**dadurch gekennzeichnet, dass**
zwischen Gebläse (6) und Registerunterraum (5) oder wenigstens einem Registerunterraumabschnitt (51) eine Einblaseinrichtung (8) zur Vergleichmäßigung des Luftstroms beim Einblasen der Luft in den Registerunterraum (5) oder wenigstens einem Registerunterraumabschnitt (51) in Richtung senkrecht zur Einblasrichtung und senkrecht zur Richtung der Durchlassöffnungen (70) vorgesehen ist.

7. Backofen nach einem der vorhergehenden Ansprüche,
**dadurch gekennzeichnet, dass**
der Registerunterraum (5) oder die Registerunterraumabschnitte (51) wenigstens teilweise als Schubkästen (50) ausgestaltet sind, die sich vorzugsweise in einer Richtung senkrecht zur Richtung der Durchlassöffnungen (70) in den Backofen (1) einschieben und herausziehen lassen.

8. Backofen nach Anspruch 7,
**dadurch gekennzeichnet, dass**
der Schubkasten (50) einen Deckel aufweist, der im in den Backofen (1) eingeschobenen Zustand wenigstens teilweise die Luftleiteinrichtung (7) bildet.

9. Backofen nach einem der vorhergehenden Ansprüche,
**dadurch gekennzeichnet, dass**
die Transporteinrichtung (30) als umlaufendes Förderband ausgestaltet ist, wobei der Rücklauf (32) des Förderbandes vorzugsweise unterhalb des Registerunterraums (5) angeordnet ist.

## Claims

1. Oven (1) comprising a baking chamber (2) and a supporting device (3), which is arranged therein and is intended for supporting articles which are to be baked or baking trays, wherein the supporting device (3) has provided beneath it a register (4) and a register underchamber (5), which are configured such that air blown into the register underchamber (5) can pass from the register underchamber (5), through the register (4) and the supporting device (3), to the upper side of the supporting device (3), wherein the oven (1) is a conveyor oven with a supply end (10) and a delivery end (11), in the case of which the supporting device (3) is designed in the form of a transporting device (30) for transporting articles which are to be baked or baking trays in a transporting direction (91) through the baking chamber (2) from the supply end (10) to the delivery end (11),
**characterized in that**
the register (4) is a sheet-like arrangement of a line (40) with an inflow connection and an outflow connection, in the case of which the length of the line (40) is greater than the distance between the inflow and outflow connections, and **in that** an air-channelling device (7) with a plurality of through-openings (70) is provided between the register underchamber (5) and register (4), wherein the through-openings (70) are arranged such that air passing through the through-openings (70) of the air-channelling device (7) from the register underchamber (5) comes into contact with the underside of the line (40) of the register (4), and the line (40) of the register (4) thus has air blown directly on it.

2. Oven according to Claim 1,
**characterized in that**
at least two different sizes of through-openings (70) are provided.

3. Oven according to Claim 1 or 2,
**characterized in that**
the through-openings (70) of the air-channelling device (7) can be adjusted in size, wherein the adjustment is possible preferably individually or in groups.

4. Oven according to one of the preceding claims,
**characterized in that**
the register underchamber (5) is divided into register-underchamber portions (51), wherein an exchange of air between the individual register-underchamber portions (51) is prevented.

5. Oven according to one of the preceding claims,
**characterized in that**
at least one fan (6) is provided for blowing air laterally into the register underchamber (5) or into at least one register-underchamber portion (51), wherein the blowing-in direction is preferably perpendicular to the direction of the through-opening (70).

6. Oven according to Claim 5,
**characterized by** the provision, between the fan (6) and register underchamber (5) or at least one register-underchamber portion (51), of a blowing in device (8) for evening out the air flow when the air is blown into the register underchamber (5) or at least one register-underchamber portion (51) in a direction perpendicular to the blowing-in direction and perpendicular to the direction of the through-openings (70).

7. Oven according to one of the preceding claims,
**characterized in that**
the register underchamber (5) or the register-underchamber portions (51) are configured, at least in part, as drawers (50) which can be pushed into the oven (1), and pulled out of the same, preferably in a direction perpendicular to the direction of the through-openings (70).

8. Oven according to Claim 7,
**characterized in that**
the drawer (50) has a cover which, in the state in which it is pushed into the oven (1), forms, at least in part, the air-channelling device (7).

9. Oven according to one of the preceding claims,
**characterized in that**
the transporting device (30) is configured in the form of a circulating conveying belt, wherein the return strand (32) of the conveying belt is arranged preferably beneath the register underchamber (5).

## Revendications

1. Four de cuisson (1) comportant une chambre de cuisson (2) et un dispositif de support (3) agencé dans celle-ci pour supporter des produits à cuire ou des supports pour produits à cuire, dans lequel un registre (4) et un sous-espace de registre (5) sont prévus au-dessous du dispositif de support (3), qui sont réalisés de telle sorte que de l'air soufflé dans le sous-espace de registre (5) peut parvenir depuis le sous-espace de registre (5) à travers le registre (4) et le dispositif de support (3) jusqu'à la face supérieure du dispositif de support (3), le four de cuisson (1) étant un four continu présentant une extrémité de réception (10) et une extrémité de distribution (11), dans lequel le dispositif de support (3) est réalisé sous forme de dispositif de transport (30) pour transporter des produits à cuire ou des supports pour produits à cuire dans une direction de transport (91) à travers la chambre de cuisson (2) depuis l'extrémité de réception (10) jusqu'à l'extrémité de distribution (11),
**caractérisé en ce que**
le registre (4) est un agencement surfacique d'une conduite (40) présentant un raccord d'alimentation et un raccord d'évacuation, dans laquelle la longueur de la conduite (40) est plus grande que la distance entre les raccords d'alimentation et d'évacuation, et **en ce qu'**un dispositif de guidage d'air (7) présentant une pluralité d'ouvertures de passage (70) est prévu entre le sous-espace de registre (5) et le registre (4), les ouvertures de passage (70) étant disposées de telle sorte que de l'air passant du sous-espace de registre (5) à travers les ouvertures de passage (70) du dispositif de guidage d'air (7) tombe sur la face inférieure de la conduite (40) du registre (4) et que la conduite (40) du registre (4) est ainsi exposée au soufflage direct.

2. Four de cuisson selon la revendication 1,
**caractérisé en ce que**
il est prévu au moins deux tailles différentes d'ouvertures de passages (70).

3. Four de cuisson selon la revendication 1 ou 2,
**caractérisé en ce que**
les ouvertures de passage (70) du dispositif de guidage d'air (7) sont réglables vis-à-vis de leur taille, le réglage étant possible de préférence individuellement ou par groupe.

4. Four de cuisson selon l'une des revendications précédentes,
**caractérisé en ce que**
le sous-espace de registre (5) est subdivisé en portions (51) de sous-espace de registre, un échange d'air entre les portions individuelles (51) de sous-espace de registre étant inhibé.

5. Four de cuisson selon l'une des revendications précédentes,
**caractérisé en ce que**
il est prévu au moins un ventilateur (6) pour souffler de l'air latéralement dans le sous-espace de registre (5) ou dans au moins une portion (51) de sous-espace de registre, la direction de soufflage étant de préférence perpendiculaire à la direction de l'ouverture de passage (70).

6. Four de cuisson selon la revendication 5,
**caractérisé en ce que**
il est prévu un dispositif de soufflage (8) entre le ventilateur (6) et le sous-espace de registre (5) ou au moins une portion (51) de sous-espace de registre, qui est destiné à homogénéiser le flux d'air lors du soufflage de l'air dans le sous-espace de registre (5) ou dans au moins une portion (51) de sous-espace de registre en direction perpendiculaire à la direction de soufflage et perpendiculaire à la direction des ouvertures de passage (70).

7. Four de cuisson selon l'une des revendications précédentes,
**caractérisé en ce que**
le sous-espace de registre (5) ou les portions (51) de sous-espace de registre sont réalisés au moins partiellement sous forme de tiroirs (50) aptes à s'escamoter dans le four de cuisson (1) et à se déployer hors de celui-ci de préférence dans une direction perpendiculaire à la direction des ouvertures de passage (70).

8. Four de cuisson selon la revendication 7,
**caractérisé en ce que**
le tiroir (50) comprend un couvercle qui, dans l'état escamoté dans le four de cuisson (1), forme au moins partiellement le dispositif de guidage d'air (7).

9. Four de cuisson selon l'une des revendications précédentes,
**caractérisé en ce que**
le dispositif de transport (30) est réalisé sous forme de bande de transport en recirculation, le retour (32) de la bande de transport étant agencé de préférence au-dessous du sous-espace de registre (5).
